# EUROPÄISCHE PATENTSCHRIFT

(11) **EP 1 487 929 B1**
(45) Veröffentlichungstag und Bekanntmachung des Hinweises auf die Patenterteilung: **20.08.2014**
(21) Anmeldenummer: 03720329.6
(22) Anmeldetag: 12.03.2003
(51) Int. Cl.: C09D 175/00, C08G 18/66, C08G 18/78

(54) **POLYOLMISCHUNG ZUR HERSTELLUNG VON POLYURETHAN-GELCOATS**
POLYOL MIXTURE FOR THE PRODUCTION OF POLYURETHANE GELCOATS
MELANGE POLYOL DESTINE A LA PRODUCTION D'ENDUCTIONS POLYURETHANE EN GEL

(30) Priorität: 20.03.2002 DE 10212391
(43) Veröffentlichungstag der Anmeldung: 22.12.2004
(73) Patentinhaber: Mankiewicz Gebr. & Co. (GmbH & Co. KG), D-21107 Hamburg (DE)
(72) Erfinder: WEHNER, Jochen, 21075 Hamburg (DE)
(74) Vertreter: UEXKÜLL & STOLBERG
(86) Internationale Anmeldenummer: PCT/EP2003/002554
(87) Internationale Veröffentlichungsnummer: WO 2003/078534

(56) Entgegenhaltungen:
- EP-A- 0 026 915
- DE-A- 19 729 982
- DE-A- 19 732 313
- US-A- 4 267 299
- US-A- 4 570 270
- US-A- 4 695 618
- Römpp: Gelcoat, 30.10.13
- wikipedia, deutsch: Gelcoat, 30.10.13
- wikipedia, englisch: Gelcoat, 30.10.13

## Beschreibung

Die Erfindung betrifft die Verwendung einer Zweikomponenten-Zusammensetzung, welche aus einer Polyolkomponente und einer Polyisocyanatkomponente besteht, zur Herstellung von Polyurethan-Gelcoats in Verbundbauweise mit Kunstharz. Außerdem betrifft die Erfindung ein Verfahren zur Herstellung von Polyurethan-Gelcoats in Verbundbauweise mit Kunstharz, und ein Gelcoat im Verbund mit Kunstharz.

Die Oberflächen von Verbundwerkstoffen (beispielsweise Verbundwerkstoffen aus Glasfasergewebe bzw. -vlies und Epoxidharz) sind oft wenig ansehnlich und außerdem nicht licht- und witterungsbeständig. Sie müssen deshalb mit einer Oberflächenbeschichtung versehen werden. Vor der Oberflächenbeschichtung von Epoxidharzverbundstoffen muss geschliffen und gespachtelt werden, da es bei der direkten Oberflächenbeschichtung des Verbundwerkstoffs zur Aufrichtung von Fasern kommt. Eine Alternative dazu ist der Einsatz eines Gelcoats.

Ein Gelcoat ist ein Harzsystem, das auf Formteile in Verbundbauweise zur Herstellung glatter Bauteiloberflächen aufgebracht wird und gleichzeitig auch eine ansehnliche und gegebenenfalls licht- und witterungsbeständige Oberfläche ergibt. Dazu wird das Gelcoat-Harzsystem nach dem Vermischen seiner Reaktionskomponenten innerhalb der Verarbeitungszeit (Topfzeit) als erste Schicht in eine Form eingetragen. Die nach dem Gelieren erhaltene Schicht ist ausreichend mechanisch stabil, um bei Auftragen des Kunstharzes (beispielsweise eines Epoxidharzes) und gegebenenfalls eines anorganischen oder organischen Vlieses oder Gewebes (beispielsweise eines Glasfasergewebes oder Glasfaservlieses) nicht beschädigt zu werden (In-Mold-Verfahren). Entsprechendes gilt bei Injektionsverfahren und beim Aufbringen von Nasslaminaten sowie beim Aufbringen von Prepregs.

Um eine ausreichende Haftung zwischen Kunstharz und Gelcoat zu gewährleisten, muss die Beschichtung mit Kunstharz innerhalb der Laminierzeit des Gelcoats erfolgen. Anschließend werden Kunstharz und Gelcoat vollständig ausgehärtet.

Bei der Beschreibung der Erfindung gelten die folgenden Begriffsbestimmungen:
- Die Laminierzeit ist der Zeitraum beginnend mit dem Zeitpunkt der Klebfreiheit des in die Form applizierten Gelcoat-Films, in dem der Gelcoat-Film überlaminiert werden muss, um noch eine Haftung zwischen Gelcoat und Laminiat sicherzustellen.
- Die Topfzeit ist der Zeitraum beginnend mit der Vermischung der beiden Reaktionskomponenten bis zum Gelieren der Reaktionsmischung. Nach Beendigung der Topfzeit ist die Reaktionsmischung nicht mehr verarbeitbar.
- Die Klebfreizeit ist der Zeitraum beginnend mit dem Auftragen der homogenen, angemischten Reaktionsmischung auf die Formoberfläche bis zum Erreichen der Klebfreiheit des applizierten Films.
- Unter Gelzeit wird die in E-DIN VDE 0291-2 (VDE 0291-Teil 2): 1997-06 unter Punkt 9.2.1 beschriebene, bis zum Gelieren der Reaktionsmischung gemessene Zeit verstanden.

Als Gelcoatharzsysteme werden beispielsweise Formulierungen auf Basis radikalisch härtender Harze wie z.B. ungesättigte Polyester (UP), Vinylester oder Acrylat-terminierte Oligomere eingesetzt. Diese Harzsysteme sind bei der Anwendung in Verbindung mit UP-Kunstharzen (UP-Verbundwerkstoffen) verarbeitungssicher und zeigen gute Haftung zu einer Vielzahl von Kunstharzen (Verbundwerkstoffhaftung), da aufgrund der durch Luftsauerstoff inhibierten Härtungsreaktionen an der innen liegenden Gelcoat-Oberfläche ein Aushärten der Grenzfläche erst nach dem Auftragen des Kunstharzes erfolgt. Viele kommerzielle Gelcoats auf UP-Basis zeigen aber keine ausreichende Glanzbeständigkeit und neigen zu Abkreiden und Haarrissbildung. Weitere Nachteile von Gelcoats auf Basis von UP sind die unvermeidbaren Monomeremissionen, ein häufig sehr starker Schrumpf während des Aushärtens, der zu Spannungen in der Grenzfläche Verbundwerkstoff/Gelcoat - und damit zu schlechter Stabilität der Grenzfläche - führt, sowie die üblicherweise schlechte Haftung gegenüber Verbundwerkstoffen auf Basis von Epoxidharz (EP).

Zur Anwendung in Verbindung mit EP-Verbundwerkstoffen können beispielsweise EP-Gelcoats (z.B. von der Fa. SP-Systems) eingesetzt werden. EP-Gelcoats zeigen im Vergleich mit UP-Gelcoats eine sehr viel bessere Haftung zu EP-Verbundwerkstoffen. EP-Gelcoats enthalten auch keine flüchtigen Monomeren und sind deshalb arbeitshygienisch weniger bedenklich als die meist styrolhaltigen UP-Gelcoats. Die Nachteile von EP-Gelcoats sind aber
► die geringer Toleranz gegenüber Ungenauigkeiten im Mischungsverhältnis, dies kann u.U. im gehärteten Gelcoat zu Verfärbungen und stark verminderter mechanischer Beständigkeit führen,
   ➢ die stark exotherme Härtungsreaktion, die nur kleine Ansatzgrößen erlaubt,
   ➢ die sehr plötzlich verlaufende Härtungsreaktion,
   ➢ die unzureichende Witterungsstabilität,
   ➢ die sehr schlechte Thermovergilbungsstabilität sowie
   ➢ der hohe Preis von einigermaßen vergilbungsstabilen EP-Harzen.

Grundsätzlich ist deshalb für Anwendungen, bei denen eine hohe Licht- und Verwitterungsstabilität gefordert ist, Oberflächenbeschichtungen auf Basis von aliphatischen Polyurethanen der Vorzug zu geben. Bei der Formulierung von PU-Gelcoats ist jedoch zu berücksichtigen, dass herkömmliche Mischungen aus Polyol und Polyisocyanat erst bei sehr weit fortgeschrittener Reaktion gelieren. Dann ist aber bereits das Reaktions- und damit das Haftvermögen des PU-Gelcoats gegenüber dem für den Verbundwerkstoff verwendeten Kunstharz stark eingeschränkt (d. h. die Klebfreizeit ist vergleichsweise lang, die Laminierzeit dagegen vergleichsweise kurz). Der Einsatz eines solchen herkömmlichen Produkts wäre prozesstechnisch schwierig zu realisieren und darüber hinaus bezüglich der Haftung Gelcoat/Kunstharz unzuverlässig.

Darüber hinaus weisen handelsübliche PUR-Gelcoats (von Relius Coatings) in der Regel vergleichsweise niedrige Glasübergangstemperaturen (< 40 °C) auf. Dies schränkt den Temperaturbereich stark ein, in dem ein solches Produkt eingesetzt werden kann.

Zur Abkürzung der Prozeßzykluszeiten bei der Fertigung von Epoxy-Laminaten, insbesondere wenn ein Epoxy-Prepreg zum Laminataufbau eingesetzt wird, werden häufig Härtungstemperaturen über 80 °C angewendet. Dies ist auch dann notwendig, wenn an das Laminat hohe Anforderungen bezüglich der Warmformbeständigkeit gestellt werden. Übliche PUR-Gelcoats zeigen bei Einsatz in Prozessen mit Härtungstemperaturen > 80 °C nach der Entformung des Bauteils häufig Oberflächendefekte in Form von Einfallstellen. Aus diesem Grund ist der Einsatz von PUR-Gelcoats bei Härtungstemperaturen von > 80 °C nur bedingt möglich und erfordert häufig ein aufwendiges Nacharbeiten zum Glätten der Bauteiloberfläche.

Die DE-T-690 11 540 offenbart ein Verfahren zur Herstellung eines Polyurethanfilms, bei dem ein Polyurethan-Reaktionsgemisch hergestellt wird und dieses Reaktionsgemisch mittels einer Sprühpistole auf eine Oberfläche aufgesprüht wird. Dieses Verfahren ist geräteaufwendig. Das Polyurethan-Reaktionsgemisch kann aminhaltige Initiatoren umfassen, wobei aliphatische oder alicyclische Alkanolamine oder Polyamine mit einer nicht direkt an einen aromatischen Ring gebundenen Aminogruppe in Betracht gezogen werden.

Die US-A-4 950 792 und die verwandte EP-A-0 220 641 offenbaren verschiedene 4,4'-Methylenbisaniline sowie deren Verwendung als Kettenverlängerungsmittel oder Vernetzungsmittel für Polyurethane, als Härter für Epoxidharze und als Zwischenprodukt. Bei einem vorgeschlagenen Verfahren werden zunächst Verbindungen mit reaktionsfähigen Wasserstoffatomen, wie Polyester mit endständigen OH-Gruppen, mit Diisocyanaten zu einem Prepolymer umgesetzt, welches dann in einem zweiten Schritt mit einem aromatischen Diamin als Kettenverlängerungsmittel oder Vernetzungsmittel zur Reaktion gebracht wird (Prepolymer-Verfahren). Eine stufenweise Aushärtung mit vergleichsweise kurzen Gel- und Klebfreizeiten und gleichzeitig vergleichsweise langen Laminierzeiten, wie sie bei der Herstellung eines Gelcoats unverzichtbar sind, ist bei diesem Verfahren nicht möglich.

Gegebenenfalls kann auch so vorgegangen werden, dass in einem ersten Schritt Vernetzungsmittel/Kettenverlängerungsmittel im Polyol gelöst wird und erst in einem zweiten Schritt mit dem Isocyanat verabeitet wird. In einer weiteren vorgeschlagenen Vorgehensweise wird nach dem one-shot-Verfahren gearbeitet (EP-A-0 220 641, S. 12, zweiter und dritter Absatz). Dazu werden hochmolekulare Polyhydroxyverbindungen im Gemisch mit Vernetzungsmittel/Kettenverlängerungsmittel mit Diisocyanat umgesetzt. Die Beispiele der US-A-4 950 792 und der EP-A-0 220 641 beschäftigen sich allerdings ausschließlich mit nach dem Prepolymer-Verfahren hergestellten Polyurethanen.

Darauf aufbauend offenbart die US-A-6 013 692 die Herstellung von geschäumten Polyurethan-Elastomeren durch Umsetzung von Isocyanatkomponenten mit Verbindungen mit mindestens zwei mit Isocyanat reaktiven Wasserstoffatomen und 4,4'-Methylenbisanilinen sowie einem Schäumungsmittel.

Die US-A-5 026 815 offenbart, dass Gemische ausgewählter 4,4'-Methylenbisaniline als Kettenverlängerungsmittel für Gießharzpolyurethanelastomere auf der Basis von p-Phenylenmethylendiisocyanat-Prepolymeren verwendet werden können.

Die US-A-6 046 297 offenbart in Formen gießbare Polyurethanelastomerzusammensetzungen, die durch Mischen von Toluoldiisocyanat mit aliphatischem Diisocyanat und Polyol zu einem Prepolymer und Härten des Prepolymers mit aromatischem Diaminhärter hergestellt werden. Das Polyol kann eine Mischung von hochmolekularem Polyol mit niedrigmolekularem Polyol sein. Durch einen niedrigen Gehalt des Prepolymers an Toluoldiisocyanat wird die Neigung des Prepolymers vermindert, beim Härten zu reißen.

Die US-A-5 962 617 betrifft die Umsetzung von Prepolymer, hergestellt aus Polyetherglykol oder Polyesterglykol und Diisocyanat, mit aromatischem Amin. Dem Prepolymer, bei dem es sich formell um aus Polyetherglykol oder Polyesterglykol und Diisocyanat hergestelltes, kettenverlängertes Diisocyanat handelt, kann Triol zugegeben werden, um höchstens 1% Vernetzung herbeizuführen (Spalte 4, Zeilen 29 ff.). Die letztgenannten Dokumente des Standes der Technik geben jedoch keine Hinweise auf ein modernes Gelcoat.
DE 197 29 982 A1 offenbart Zweikomponenten-Polyurethansysteme aus einer Polyol- und einer Isocyanatkomponente, wobei die Polyolkomponente mindestens zwei Amine A1 und A2 enthält und die Reaktivität R1 von Amin 1 gegenüber Isocyanat wesentlich größer als die Reaktivität R2 von Amin 2 gegenüber Isocyanat ist.
US 4 695 618 B1 offenbart ein Verfahren zur Herstellung von Polyurethan durch lösungsmittelfreies Sprühen von gleichvolumigen Mischungen von (a) flüssigem Polyisocyanat, Polyisocyanurat oder isocyanat-terminiertem Quasi-Prepolymer und (b) Härtungsmittel. Das Härtungsmittel ist aus einem Gemisch von 0 bis 15 Gew.-% Polyamin mit einem Äquivalentgewicht von etwa 30 bis etwa 200, etwa 10 bis 20% niedrigmolekularem Glykol mit einem Äquivalentgewicht von etwa 30 bis 200, etwa 40 bis 80% relativ hochmolekularem Polyol oder Polyamin mit einem Äquivalentgewicht von etwa 350 bis 2000, und etwa 1 bis 20% synthetischem Zyolith-Molekularsieb zusammengesetzt, wobei das mittlere Äquivalentgewicht von (b) 150 bis 500 beträgt.
US 4 570 270 B1 offenbart Polyurethan- und Poly(harnstoff)-urethan-Zusammensetzungen als Kleb- und Füllstoffe für menschliche oder tierische Knochen.
EP 0 026 915 A2 betrifft die Herstellung von ggf. zellhaltigem Polyurethan-Polyharnstoff-Formkörpern durch ein One-Shot-Verfahren. Dabei werden spezielle Diaminodiphenylmethan-Verbindungen eingesetzt.
Die DE 197 32 313 A1 beschreibt eine bei Raumtemperatur härtbare Polyurethanharz-Zusammensetzung, die sich zur Verwendung als wasserdichtes Beschichtungsmaterial im Bauwesen eignet.
Die US 4 267 299 B1 offenbart lösungsfreie Zusammensetzungen zur Herstellung von sprühbaren Polyurethanen und Poly(harnstoff)urethanen aus einer Mischung von (a) isocyanat-terminiertem Prepolymer oder Quasi-Prepolymer und (b) einem Härtungsmittel, das ein relativ hochreaktives Polyol oder Polyamin oder eine Kombination davon und mindestens etwa 20 Gew.-% reaktiven Füllstoff umfasst, der ein Polyol mit einem Äquivalentgewicht im Bereich von 300 bis 2000 umfasst.

Demzufolge liegt der Erfindung die Aufgabe zugrunde, Komponenten für ein Gelcoat-Harzsystem auf Polyurethan-Basis zur Verfügung zu stellen, die die genannten Nachteile nicht aufweisen. Die Komponenten für das Gelcoat-Harzsystem sollen,
- eine vergleichsweise lange Laminierzeit bei für das Mischen und das Einbringen in die Form ausreichender Topfzeit und für die Filmbildung hinreichenden, aber vergleichsweise kurzen Gel- und Klebfreizeiten ergeben,
- einfach verarbeitbar sein (d. h. keine zusätzliche Geräte für eine Heissapplikation und/oder Sprühapplikation erfordern),
- eine gute Haftung zwischen Gelcoat und Kunstharz ergeben (insbesondere zu Epoxidharzen, bei langen Laminierzeiten),
- ein Gelcoat ergeben, das licht- und witterungsbeständig ist und nicht zur Bildung von Haarrissen neigt,
- eine glatte Bauteiloberfläche, frei von Einfallstellen auch bei Härtungstemperaturen zwischen 80 °C und 130 °C, erzeugen und
- preiswert sein.

Dazu wären zwar Polyurethan-Gelcoats mit einer hohen Glasübergangstemperatur T_{G} grundsätzlich besonders gut geeignet. Eine hohe Glasübergangstemperatur setzt eine hohe Vernetzung des Polyurethans voraus, d. h. den Einsatz eines hochfunktionellen Polyols. Mit der Verwendung eines hochfunktionellen Polyols geht aber eine sehr kurze Laminierzeit einher. Deshalb war es auch eine Aufgabe der vorliegenden Erfindung, Komponenten für ein Polyurethan-Gelcoat zur Verfügung zu stellen, die einerseits ein Gelcoat mit hoher Tg ergeben, andererseits aber eine Verlängerung der Laminierzeit ermöglichen.

Diese Aufgabe wird durch die Verwendung einer Zweikomponenten-Zusammensetzung, welche
A) eine Polyolkomponente, die
   A1) ein oder mehrere niedrigmolekulare Polyole mit einem Molekulargewicht von 60 bis 160 g/mol und einer Hydroxylgruppenkonzentration von 20 bis 35 mol Hydroxyl-gruppen je kg niedrigmolekulares Polyol,
   A2) ein oder mehrere höhermolekulare Polyole und
   A3) ein oder mehrere lichtbeständige aromatische Amine enthält, und
B) eine Polyisocyanatkomponente umfasst, die ein oder mehrere Polyisocyanate enthält,
zur Herstellung von Polyurethan-Gelcoats in Verbundbauweise mit Kunstharz gelöst.

Die Erfindung beruht u. a. darauf, dass gefunden wurde, dass lichtbeständige aromatische Amine einer Polyolkomponente zur Herstellung von Polyurethan-Gelcoats zugesetzt werden können und die aus der erfindungsgemäßen Polyolkomponente und einer Polyisocyanatkomponente hergestellte Mischung besonders gute Verarbeitungseigenschaften bei der Herstellung von Polyurethan-Gelcoats aufweist und darüber hinaus ein besonders lichtbeständiges Gelcoat ergibt. Erfindungsgemäße ausgehärtete Gelcoats weisen vorzugsweise eine Shore D Härte von mehr als 65 auf (bestimmt nach DIN EN ISO 868) und die Reissdehnung bei 23 °C ist vorzugsweise größer als 10% (bestimmt nach ASTM-D-522).

### 1. Polyolkomponente

Die erfindungsgemäß eingesetzte Polyolkomponente zeichnet sich dadurch aus, dass sie mindestens ein Polyol mit vergleichsweise geringem Molekulargewicht und vergleichsweise hoher Hydroxylgruppenkonzentration c_{OH} enthält. Das niedrigmolekulare Polyol (bzw. die gegebenenfalls zwei, drei, vier etc. niedrigmolekularen Polyole) führt (führen) dazu, dass bereits zu Beginn der Reaktion der Polyolkomponente mit einer Polyisocyanatkomponente (nach ausreichender Topfzeit und vertretbarer Gelzeit) ein sehr engmaschiges Netzwerk gebildet wird, welches die gewünschte mechanische Stabilität der gelierten Gelcoatschicht sicherstellt.

### Niedricrmolekulares Polyol

Erfindungsgemäß ist ein "niedrigmolekulares Polyol" definiert als ein Polyol mit einem Molekulargewicht von 60 bis 160 g/mol (bevorzugt 60 bis 150 g/mol, bevorzugter 60 bis 140 g/mol und insbesondere 90 bis 137 g/mol) und einer Hydroxylgruppenkonzentration von 20 bis 35 mol Hydroxylgruppen je kg niedrigmolekulares Polyol.

Bevorzugt liegt die Hydroxylgruppenkonzentration c_{OH} im Bereich von 25 bis 34, bevorzugter 28 bis 34 und insbesondere im Bereich von 30 bis 33 mol Hydroxylgruppen je kg niedrigmolekulares Polyol.

Grundsätzlich sind erfindungsgemäß als niedrigmolekulare Polyole alle geradkettigen oder verzweigten aliphatischen Glykole, Triole, Tetrole, Pentole und deren Mischungen geeignet. Beispiele sind die nachfolgend aufgeführten niedrigmolekularen Polyole (Tabelle 1).

**Tabelle 1**

| **Bevorzugte niedrigmolekulare Polyole** | | |
|---|---|---|
| **Niedrigmolekulares Polyol** | **[g/mol]** | **c_{OH} [mol/kg]** |
| Ethylenglykol | 62,07 | 32,22 |
| 1,2-und 1,3-Propylenglykol | 76,10 | 26,28 |
| 1,2-,1,3-,2,3- und 1,4-Butandiol | 90,13 | 22,2 |
| Glycerol | 92,10 | 32,58 |
| Trimethylolmethan | 106,12 | 28,27 |
| Trimethylolethan ((1,1,1-Tris(hydroxymethyl)-ethan) | 120,15 | 24,97 |
| Trimethylolpropan ((1,1,1-Tris(hydroxymethyl)-propan) | 134,18 | 22,36 |
| meso-Erythrit | 122,12 | 32,76 |
| Pentaerythrit | 136,15 | 29,38 |

Bevorzugt liegt der Anteil niedrigmolekulares Polyol (d.h. die Summe aller niedrigmolekularen Polyole in der Polyolkomponente) im Bereich von 2 bis 60 Gew.-%, bevorzugter 5 bis 50 Gew.-%, insbesondere 10 bis 45 Gew.-% wie 20 bis 40 Gew.-%, wobei ein Anteil von 30 bis 35 Gew.-% besonders bevorzugt ist, bezogen auf die Gesamtmasse der Bestandteile A1, A2 und A3 der Polyolkomponente.

### Höhermolekulares Polyol

Das in der erfindungsgemäß eingesetzten Polyolkomponente enthaltene höhermolekulare Polyol kann grundsätzlich jedes zur Herstellung von Polyurethanen übliche Polyol sein, beispielsweise Polyesterpolyol, Polyetherpolyol, Acrylatpolyol und/oder Polyol auf Basis dimerer Fettsäuren. Dabei umfassen die Bestandteile A1 und A2 alle in der erfindungsgemäß eingesetzten Polyolkomponente enthaltenen Polyole, d.h. ein Polyol, das kein niedrigmolekulares Polyol gemäß oben genannter Definition ist, gilt für die Zwecke der vorliegenden Beschreibung als ein höhermolekulares Polyol. Geeignete höhermolekulare Polyole sind z.B. in der genannten DE-T-690 11 540 beschrieben. Bevorzugte höhermolekulare Polyole sind Polyetherpolyole (Polyalkoxylenverbindungen), die durch Polyaddition von Propylenoxid und/oder Ethylenoxid auf Starter niedrigen Molekulargewichts mit OH-Gruppen und einer Funktionalität von 2 bis 8 gebildet werden.

Weitere typische höhermolekulare Polyole sind die Polyesterpolyole, die Esterkondensationsprodukte von Dicarbonsäuren mit Polyalkoholen niedrigen Molekulargewichts darstellen und eine Funktionalität von 2 bis 4 haben, wobei solche höhermolekularen Polyesterpolyole bevorzugt sind, die eine Hydroxylgruppenkonzentration im Bereich von 6 bis 15 mol/kg höhermolekulares Polyesterpolyol aufweisen, bevorzugt 8 bis 12 mol Hydroxylgruppen pro kg. Das höhermolekulare Polyol (bzw. die gegebenenfalls zwei, drei, vier etc. höhermolekularen Polyole) der Polyolkomponente stellt (stellen) sicher, dass eine ausreichend lange Laminierzeit zur Verfügung steht. Dies ist wichtig, um eine gute Haftung zum Kunstharz des Verbundwerkstoffs zu erreichen.

Besonders bevorzugte höhermolekulare Polyole sind:
► ein Polyol auf Acrylatbasis mit einer Funktionalität von etwa 2,3 und einem Hydroxylgruppengehalt von 12,5 mol/kg,
► ein Polyetherpolyol mit einer Funktionalität von 3 und einem Hydroxylgruppengehalt von etwa 16,5 mol/kg,
► ein Umsetzungsprodukt aus Trimethylolpropan und Polycaprolacton mit einer Funktionalität von etwa 3 und einem Hydroxylgruppengehalt von etwa 10 mol/kg.

Bevorzugt liegt der Anteil höhermolekulares Polyol (d.h. die Summe aller höhermolekularen Polyole) in der Polyolkomponente im Bereich von 97 bis 30 Gew.-%, bevorzugt 90 bis 40 Gew.-%, bevorzugter 80 bis 45 Gew.-% und insbesondere 70 bis 50 Gew.-%, bezogen auf die Gesamtmasse der Bestandteile A1, A2 und A3 der Polyolkomponente. In einer bevorzugten Ausführungsform ist die Polyolkomponente frei von aliphatischen Dicarbonsäuren.

### Lichtbeständiges aromatisches Amin mit geringer Reaktivität gegenüber Isocyanaten

Geeignete lichbeständige aromatische Amine sind z.B. in den US-A-4 950 792, US-A-6 013 692, US-A-5 026 815,US-A-6 046 297 und US-A-5 962 617 offenbart.

Bevorzugte lichtbeständige aromatische Amine zeichnen sich dadurch aus, dass sie, gelöst in Toluol (20 Gew.-% Amin in Toluol), und bei 23 °C gemischt mit einer äquimolaren Menge eines oligomeren HDI-Isocyanats (Hexamethylendiisocyanats) mit einem NCO-Gehalt von etwa 5,2 mol/kg und einer Viskosität im Bereich von 2750 bis 4250 mPas, gelöst in Toluol (80 Gew.-% Isocyanat in Toluol), eine Gelzeit von mehr als 30 Sekunden, bevorzugt mehr als 3 Minuten, bevorzugter mehr als 5 Minuten und insbesondere mehr als 20 Minuten ergeben.

Ein besonders bevorzugtes lichtbeständiges aromatisches Amin ist dadurch gekennzeichnet, dass es, gelöst in Toluol (25 Gew.-% Amin in Toluol) und bei 23 °C gemischt mit einer äquimolaren Menge eines Oligomeren HDI-Isocyanats mit einem NCO-Gehalt von etwa 5,2 mol/kg und einer Viskosität im Bereich von 2750 bis 4250 mPas eine Mischung ergibt, wobei die Mischung, auf inerte weiße Prüfplatten aufgebracht und im Umluftofen für 30 Minuten bei 80 °C und dann für 60 Minuten bei 120 °C gehärtet ein Coating mit einer Trockenschichtdicke von etwa 20 *µ*m ergibt, wobei das Coating bei 300stündiger künstlicher Bewitterung nach ASTM-G-53 (4 Stunden UVB 313, 4 Stunden Kondensation) eine Farbtonänderung Delta E (nach DIN 5033 Teil 4 gemessen und nach DIN 6174 ausgewertet) von höchstens 50 zeigt, bevorzugt höchstens 45, insbesondere höchstens 40, wie höchstens 30.

Erfindungsgemäß bevorzugt eingesetzte lichtbeständige aromatische Amine sind Methylenbisaniline, insbesondere 4,4'-Methylen-bis(2,6-dialkylaniline), bevorzugt die in der US-A-4 950 792 beschriebenen nicht-mutagenen Methylenbisaniline.

Besonders geeignet sind die in der folgenden Tabelle 2 aufgelisteten 4,4'-Methylenbis(3-R¹-2-R²-6-R³-aniline).

**Tabelle 2**

| **4,4'-Methylenbis (3-R¹-2-R²-6-R³-aniline)** | | | |
|---|---|---|---|
| | R¹ | R² | R³ |
| Lonzacure M-DMA | H | CH₃ | CH₃ |
| Lonzacure M-MEA | H | C₂H₅ | CH₃ |
| Lonzacure M-DEA | H | C₂H₅ | C₂H₅ |
| Lonzacure M-MIPA | H | C₃H₇ | CH₃ |
| Lonzacure M-DIPA | H | C₃H₇ | C₃H₇ |
| Lonzacure M-CDEA | Cl | C₂H₅ | C₂H₅ |

Das erfindungsgemäß besonders bevorzugte lichtbeständige aromatische Amin ist 4,4'-Methylenbis(3-chlor-2,6-diethylanilin), Lonzacure M-CDEA.

Bevorzugt liegt der Anteil lichtbeständiges aromatisches Amin in der Polyolkomponente (d.h. die Summe aller lichtbeständigen aromatischen Amine in der Polyolkomponente) im Bereich von 0,1 bis 20 Gew.-%, bevorzugt 0,3 bis 10 Gew.-%, bevorzugter 0,5 bis 5 Gew.-% und insbesondere 1 bis 3 Gew.-%, bezogen auf die Gesamtmasse der Bestandteile A1, A2 und A3 der Polyolkomponente.

### Katalysatoren

beschleunigen die Polymerisationsreaktion zwischen Polyolkomponente und Polyisocyanatkomponente. Grundsätzlich können alle zur Verwendung in Polyurethanen bekannten Katalysatoren verwendet werden, bevorzugt die in der DE-T-690 11 540 offenbarten Blei-, Wismut- und Zinn-Katalysatoren, darüber hinaus auch der stark basische Amin-Katalysator Diazabicyclo(2,2,2)octan-1,4 sowie Zirkonverbindungen.

Ein erfindungsgemäß besonders bevorzugter Katalysator zur Verwendung in einer Polyolkomponente ist Dibutylzinndilaurat (DBTL).

Eine erfindungsgemäß eingesetzte Polyolkomponente kann bis zu 1 Gew.-%, bevorzugter 0,05 bis 0,5 Gew.-%, insbesondere etwa 0,3 Gew.-% Katalysator enthalten, beispielsweise 0,3 Gew.-%, bezogen auf die Gesamtmasse der Polyolkomponente.

### Füllstoffe

Die erfindungsgemäße Polyolkomponente enthält bevorzugt größere Mengen eines oder mehrerer Füllstoffe, wobei für die Zwecke der vorliegenden Beschreibung "Pigmentstoffe" in die Definition des Begriffs "Füllstoff" eingeschlossen sind. Bevorzugte Füllstoffe sind Talkum, Dolomit, gefülltes CaCO₃, BaSO₄, Quarzmehl, Kieselerde, Titandioxid, Molsiebe und (vorzugsweise calciniertes) Kaolin. Der Gehalt einer Polyolkomponente an Füllstoff liegt bevorzugt im Bereich von 10 bis 80 Gew.-%, bevorzugter 20 bis 70 Gew.-%, insbesondere 35 bis 55 Gew.-% wie 40 bis 50 Gew.-%, bezogen auf die Gesamtmasse der Polyolkomponente. Dabei sind Mischungen von Füllstoffen bevorzugt, beispielsweise Mischungen von zwei, drei oder vier Füllstoffen.

Darüber hinaus können in der Polyolkomponente gemahlene Glasfasern enthalten sein, beispielsweise gemahlene Glasfasern einer Länge von weniger als 500 *µ*m. Diese Glasfasern verhindern das Weiterreißen eines eventuellen Risses.

### 2. Polyisocyanatkomponente

Bevorzugt in der Polyisocyanatkomponente eingesetzte Polyisocyanate sind aliphatische Isocyanate, beispielsweise die in der DE-T-690 11 540 auf den Seiten 5 und 6 offenbarten Biuret-Isocyanate. Alle dort genannten Isocyanate sind geeignet.

Die in der Polyisocyanatkomponente als Füllstoffe einsetzbaren Kieselsäuren sind insbesondere silanisierte pyrogene Kieselsäuren. Durch den bevorzugten Gehalt der Polyisocyanatkomponente an Kieselsäure (einem Thixotropiermittel) wird sichergestellt, dass Polyolkomponente und Polyisocyanatkomponente infolge der ähnlichen Viskositäten der Komponenten gut mischbar sind und darüber hinaus die Mischung der Komponenten an einer vertikalen Fläche bis zu 1 mm Nassschichtdicke nicht abläuft. Die Menge liegt bevorzugt im Bereich von 0,1 bis 5 Gew.%, bevorzugter 0,5 bis 3 Gew.%, insbesondere 1 bis 2 Gew.%, bezogen auf die Gesamtmasse der Polyisocyanatkomponente.

### Katalysatoren

Die der Polyolkomponente zusetzbaren Katalysatoren können auch in der Polyisocyanatkomponente, oder anstelle in der Polyolkomponente in der Polyisocyanatkomponente, in den genannten Konzentrationen enthalten sein, wobei in der Polyisocyanatkomponente als Katalysatoren Zirkonverbindungen bevorzugt sind.

### 3. Additive (Siehe Lehrbuch: "Lackadditive", Johan H. Bielemann, Weinheim, Wiley-VCH, 1998).

Darüber hinaus können entweder die Polyolkomponente oder die Polyisocyanatkomponente, oder beide Komponenten, zusätzlich ein oder mehrere Additive ausgewählt aus Entschäumungsmitteln, Dispergiermitteln und Entlüftungsmitteln enthalten.

### Entschäumungsmittel

können in einer Menge bis 1,0 Gew.-%, bevorzugt bis 0,5 Gew.-% vorhanden sein, bezogen auf die Gesamtmasse der Komponente, in der sie eingesetzt werden.

### Entlüftungsmittel

können in einer Menge bis 1,0 Gew.-%, bevorzugt bis 0,6 Gew.-% enthalten sein, bezogen auf die Gesamtmasse der Komponente, in der sie eingesetzt werden. Viele Entschäumungsmittel wirken gleichzeitig als Entlüftungsmittel.

### Dispergiermittel

können in einer Menge bis 0,5 Gew.-%, bevorzugt bis 0,3 Gew.-% enthalten sein, bezogen auf die Gesamtmasse der Komponente, der sie zugesetzt werden.

Die Erfindung betrifft darüber hinaus die Verwendung eines lichtbeständigen aromatischen Amins in einer Polyolkomponente zur Erhöhung der Laminierzeit bei der Umsetzung der Polyolkomponente mit einer Polyisocyanatkomponente bei der Herstellung eines Polyurethan-Gelcoats.

Die Erfindung betrifft ferner ein Verfahren zur Herstellung eines Polyurethan-Gelcoats, bei dem erfindungsgemäße Polyolkomponente und Polyisocyanantkomponente gemischt werden. Bevorzugt wird in dem erfindungsgemäßen Verfahren eine erfindungsgemäße Zweikomponenten-Zusammensetzung eingesetzt.

Beim Anmischen der Polyolkomponente werden typischerweise die Polyole mit Additiven in einem Vakuum-Dissolver vorgelegt. Die Füllstoffe und Pigmente werden dann im Vakuum in den Polyolen dispergiert. Zum Anmischen der Polyisocyanatkomponente wird üblicherweise das Polyisocyanat vorgelegt und mit den entsprechenden Additiven vermischt. Anschließend werden der Füllstoff und das Thixotropiermittel im Vakuum eindispergiert.

Die relativen Mengen von Polyolkomponente und Polyisocyanatkomponente werden (insbesondere in der erfindungsgemäßen Zweikomponenten-Zusammensetzung) so gewählt, dass Hydroxylgruppen und Isocyanatgruppen im jeweils gewünschten molaren Verhältnis reagieren. Das molare Verhältnis von Hydroxylgruppen zu Isocyanatgruppen (OH : NCO) liegt üblicherweise im Bereich von 1 : 3 bis 3 : 1, bevorzugt 1 : 2 bis 2 : 1, bevorzugter 1 : 1,5 bis 1,5 : 1. Gemäß einer besonders bevorzugten Ausführungsform liegt das Verhältnis OH : NCO nahe einem stöchiometrischen molaren Verhältnis von 1 : 1, d.h. im Bereich von 1 : 1,2 bis 1,2 : 1, bevorzugt 1 : 1,1 bis 1,1 : 1, und insbesondere bevorzugt ist eine äquimolare Umsetzung, d.h. die relativen Mengen Polyolkomponente und Polyisocyanatkomponente werden so gewählt, dass das molare Verhältnis der Hydroxylgruppen zu Isocyanatgruppen bei etwa 1 : 1 liegt.

Die Gelierung der Mischung der zwei Komponenten erfolgt entweder bei Raumtemperatur oder, wenn eine beschleunigte Gelierung gewünscht wird, bei erhöhter Temperatur. Beispielsweise kann bei einer Temperatur von 40, 60 oder auch 80 °C geliert werden. Bei der besonders bevorzugten Mischung aus den Komponenten der erfindungsgemäßen Zweikomponenten-Zusammensetzung ist aber eine Temperaturerhöhung zur Beschleunigung der Gelierung nicht zwingend notwendig.

Wenn die Bildung eines mechanisch ausreichend stabilen Gels abgeschlossen ist, wird innerhalb der Laminierzeit Kunstharz, beispielsweise Epoxidharz und gewünschtenfalls Glasfasergewebe oder Glasfaservlies auf das Gelcoat aufgetragen. Durch erfindungsgemäße Polyolkomponenten und erfindungsgemäße Zweikomponenten-Zusammen-setzungen wird erreicht, dass die für das Auflaminieren zur Verfügung stehende Laminierzeit im Bereich von etwa 20 Minuten und 72 Stunden, typischerweise bei etwa 48 Stunden liegt. Das Auflaminierverfahren auf Gelcoats unterscheidet sich nicht von den Laminierverfahren, die ohne Verwendung von Gelcoats angewendet werden und z.B. in "Faserverbundbauweisen" von M. Flemming, G. Ziegmann, S. Roth, Springer, Berlin, Heidelberg, New York, 1996, beschrieben sind. Das Härten der Gelcoats erfolgt üblicherweise bei erhöhter Temperatur.

In einer weiteren Ausführungsform betrifft die Erfindung ein Verfahren zur Herstellung von Polyurethan-Gelcoats in Verbundbauweise mit Kunstharz, bei dem
i)
   A) eine Polyolkomponente, die
      A1) ein oder mehrere niedrigmolekulare Polyole mit einem Molekulargewicht von 60 bis 160 g/mol und einer Hydroxylgruppenkonzentration von 20 bis 35 mol Hydroxylgruppen je kg niedrigmolekulares Polyol,
      A2) ein oder mehrere höhermolekulare Polyole und
      A3) ein oder mehrere lichtbeständige aromatische Amine enthält,
      mit
   B) einer Polyisocyanatkomponente, die ein oder mehrere Polyisocyanate enthält
      gemischt wird,
ii) die Mischung geliert wird und
iii) wenn die Bildung eines mechanisch ausreichend stabilen Gels abgeschlossen ist, innerhalb der Laminierzeit Kunstharz auf das Gelcoat aufgetragen wird.

In einer weiteren Ausführungsform betrifft die Erfindung ein Polyurethan-Gelcoat im Verbund mit Kunstharz, welches nach dem Verfahren hergestellt ist, wobei das Gelcoat vorzugsweise nach Härten der Mischung bei 120 °C (1h) bei 900stündiger künstlicher Bewitterung nach ASTM-G-53 (4 Stunden UVB 313, 4 Stunden Kondensation) eine Farbtonänderung Delta E (nach DIN 5033 Teil 4 gemessen und nach DIN 6174 ausgewertet) von höchstens 6,5 zeigt, bevorzugt kleiner als 5, insbesondere kleiner als 4, wie kleiner als 3. Bevorzugt ist das erfindungsgemäße Polyurethan-Gelcoat durch Mischen der Komponenten der erfindungsgemäßen Zweikomponenten-Zusammensetzung und Härten der Mischung herstellbar.

Darüber hinaus betrifft die Erfindung ein Gelcoat im Verbund mit Kunstharz, wobei der Verbund sich insbesondere zur Herstellung von Formteilen eignet. Eine besonders bevorzugte Ausführungsform des Gelcoats im Verbund mit Kunstharz sind Windflügel.

Die erfindungsgemäße Zweikomponenten-Zusammensetzung bietet die folgenden Vorteile:
➢ Sie ist ein System aus lediglich zwei Komponenten und deshalb einfach zu verarbeiten.
➢ Die Tropfzeit beträgt lediglich 10 bis 15 Minuten.
➢ Die Mischung aus Polyolkomponente und Polyisocyanatkomponente ist innerhalb von 20 bis 70 Minuten klebfrei, auch bei 0,5 mm Schichtdicke und Raumtemperatur. Dafür ist keine Erwärmung notwendig.
➢ Die Laminierzeit liegt bei Raumtemperatur bei mehr als 72 Stunden, damit sind sehr gute Voraussetzungen für die Haftung zu EP-Laminaten gegeben.
➢ Die Mischung der zwei Komponenten ist bis zu 1 mm Nassschichtdicke an einer vertikalen Fläche ablaufsicher.
➢ Infolge der bevorzugt mit Kieselsäure eingestellten Viskosität der Polyisocyanatkomponente ist eine gute Mischbarkeit der zwei Komponenten gegeben.
➢ Die bei der Herstellung der zwei Komponenten eingesetzten Verbindungen sind arbeitshygienisch gut handhabbar und bei der Verarbeitung emissionsfrei.
   ► Die zwei Komponenten ergeben ein transparentes Gelcoat, können deshalb beliebig pigmentiert werden.
   ► Die gemischten Komponenten sind auch als Spachtelmasse oder als Beschichtung, die nicht im In-Mould-Verfahren appliziert werden muss, einsetzbar.
   ► Die Mischung der Komponenten ist selbstverlaufend.
   ► Eine vollständige Härtung der Mischung der zwei Komponenten kann bereits bei Temperaturen von 80 bis 160 °C innerhalb von 30 Minuten bis 2 Stunden erreicht werden.

Das erfindungsgemäße Gelcoat besitzt die folgenden vorteilhaften Eigenschaften:
► Gute Bewitterungsstabilität.
► Bei kurzer Gel- und Klebfreizeit eine lange Laminierzeit.
► Nach der Entformung erhält man glatte Bauteiloberflächen ohne Oberflächendefekte, was mindestens teilweise auf die vergleichsweise hohe Glasübergangstemperatur T_{G} von höher als 60 °C bis 70 °C zurückgeführt werden kann.
► Hohe Hydrolysebeständigkeit.
► Hohe Warmformbeständigkeit, da Tg ≈ 70 °C.
► Hohe Chemikalienbestäwdigkeit.
► Hohe Abriebbeständigkeit.
► Gute Schleifbarkeit. Eine Nachbehandlung des Gelcoats ist im Prinzip nicht notwendig. Werden jedoch große Bauteile aus mehreren Einzelteilen zusammengesetzt, ist es erforderlich, die Stoßkanten durch Spachtelmassen zu verschließen. Überschüssiger Spachtel wird in der Regel abgeschliffen. Um glatte Übergänge zu erhalten, ist es notwendig, dass das Gelcoat gut schleifbar ist. Das gleiche gilt, wenn Reparaturarbeiten an einer mechanisch geschädigten Fläche erforderlich werden.

Die Erfindung wird durch die folgenden Beispiele verdeutlicht.

### Beispiele

Verwendete Testmethoden sind im Folgenden beschrieben:

### Testmethode 1:

### Hinreichend geringe Reaktivität bevorzugter Amine

Zur Bestimmung der Gelzeit wird das lichtbeständige aromatische Amin, gelöst in Toluol (20 Gew.-% Amin in Toluol), bei 23 °C mit einer äquimolaren Menge eines Oligomeren HDI-Isocyanates mit einem NCO-Gehalt von etwa 21,8 % und einer Viskosität des lösungsmittelfreien Isocyanats von 2750 bis 4250 mPas, gelöst in Toluol (80 Gew.-% Isocyanat in Toluol, z.B. Desmodur N3300, Bayer AG) gemischt. Zur Bestimmung der Gelzeit dient ein Sunshine-Geltime-Meter der Firma Sunshine Scientific Instruments.

### Testmethode 2:

### Bewitterungsstabilität eines bevorzugten lichtstabilen aromatischen Amins

Dazu wurde das lichtbeständige aromatische Amin gelöst in Toluol (25 Gew.-% Amin in Toluol) bei 23 °C mit einer äquimolaren Menge eines oligomeren HDI-Isocyanates mit einem NCO-Gehalt von etwa 21,8 % und einer Viskosität des lösungsmittelfreien Isocyanats von 2750 bis 4250 mPas (z.B. Desmodur N3300, Bayer AG) zu einer Mischung gemischt. Die Mischung wurde auf inerte weiße Prüfplatten aufgebracht und im Umluftofen für 30 Minuten bei 80 °C und dann für 60 Minuten bei 120 °C gehärtet. Dies ergab ein Coating mit einer Trockenschichtdicke von etwa 20 *µ*m. Zur Prüfung der Bewitterungsstabilität des Coatings wurden Coating-beschichtete neutrale Probeplatten einer künstlichen Bewitterung nach ASTM-G-53 ausgesetzt (4 Stunden UVB 313, 4 Stunden Kondensation). Die durch die Bewitterung verursachte Farbtonänderung wird nach 150 und 300 Stunden nach DIN 5033 Teil 4 gemessen und nach DIN 6174 ausgewertet. Die erhaltenen Delta E-Werte sind ein Maß für die Farbtonabweichung des bewitterten Coatings und damit die Lichtbeständigkeit des aromatischen Amins.

### Testmethode 3:

### Bewitterungsstabilität eines erfindungsgemäßen Gelcoats (Gelcoat-Bewitterung)

Eine Polyolkomponente, die ein lichtbeständiges aromatisches Amin enthält, wird mit einer Isocyanatkomponente gemischt und die Mischung wird auf Laminat-Platten aufgebracht und gehärtet. Das erhaltene Gelcoat wird einer künstlichen Bewitterung nach ASTM-G-53 ausgesetzt (4 Stunden UVB 313, 4 Stunden Kondensation). Die dadurch verursachte Farbtonänderung wird nach 900 Stunden nach DIN 5033 Teil 4 gemessen und nach DIN 6174 ausgewertet. Die erhaltenen Delta E-Werte sind ein Maß für die Farbtonstabilität des Gelcoats bei Bewitterung. Die Härtung erfolgte bei 120 °C (1h).

### Testmethode 4:

### Vergilbungsstabilität eines erfindungsgemäßen Gelcoats in einem Test bei erhöhter Temperatur (Thermovergilbung)

Wie im Testmethode 3 beschrieben wurden Gelcoat-beschichtete Laminat-Platten hergestellt. Die Platten wurden 96 Stunden bei 120 °C im Umluftofen gelagert. Die damit verursachte Farbtonänderung wird nach DIN 5033 Teil 4 gemessen und nach DIN 6174 ausgewertet. Die erhaltenen Delta E-Werte sind ebenfalls ein Maß für die Farbtonstabilität der Gelcoats.

### Testmethode 5:

### Abrasionsstabilität

Die Abrasionsbeständigkeit der Gelcoats wurde nach ASTM-D-4060, Taber-Abraser, Rolle TS 10, Auflagegewicht 1000 g, nach 500 bzw. 1000 Runden geprüft. Der Abrieb wurde gravimetrisch bestimmt.

Erfindungsgemäß bevorzugte Abriebwerte sind (Tabelle 3):

| | | Bevorzugt | Besonders bevorzugt | ganz besonders bevorzugt |
|---|---|---|---|---|
| nach 500 Runden | ≤ 30 mg | ≤ 30 mg | ≤ 15 mg | ≤ 10 mg |
| nach 1000 Runden | ≤ 50 mg | ≤ 50 mg | ≤ 30 mg | ≤ 20 mg |

### Testmethode 6:

### Bestimmung von T_{G}-Werten von Gelcoats

Die Glasübergangstemperatur wurde nach DIN 51007 durch DSC-Messungen bestimmt. Dazu wurden ein ausgehärteter Gelcoat-Probekörper mit einer Rate von 10 K/min von -10 °C auf 250 °C erwärmt und die Glasübergangstemperatur aus dem Wärmefluss durch die Probe nach oben genannter Norm bestimmt. Das dazu eingesetzte Gerät ist ein TCl1K mit einer Messzelle DSC 30 der Firma Mettler.

### Testmethode 7:

### Prüfung der Haftung zwischen Gelcoat und Laminat

Ein 3 cm breiter und 20 cm langer Laminatstreifen von ca. 2 mm Dicke, der mit einer 0,7 mm dicken Schicht eines Gelcoats beschichtet ist, wird in einer Biegeprüfung nach DIN EN ISO 1519 über einen 5 mm-Dorn gebrochen. Die Bruchkante wird visuell beurteilt. Es wird unterschieden zwischen:
a) "Keine Haftung": d.h. Ablösung der Gelcoat-Schicht vom Laminat schon vor oder während des Biegeversuchs.
b) "Teilweise Haftung": d.h. Delamination in der Grenzfläche Gelcoat-Laminat (Adhäsionsbruch) beim Bruch.
c) "Vollständige Haftung": d.h. keine Ablösung der Gelcoat-Schicht beim Bruch des Verbundbauteils.

### Beispiel 1: Anwendung der Testmethode 1

Die Gelzeit bei Verwendung lichtbeständiger aromatischer Amine wurde gemäß Testmethode 1 bestimmt. Die Ergebnisse mit Aminen der Firma Lonza sind in der folgenden Tabelle 4 dargestellt:

**Tabelle 4**

| Lichtbeständiges aromatisches Amin | **Gelzeit** |
|---|---|
| M-DEA | 357s=5min57s |
| M-MIPA | 221s=4min41s |
| M-CDEA | 2635s=43min55s |
| M-DIPA | 166s=2min46s |

### Beispiel 2: Anwendung der Testmethode 2

Die Bewitterungsstabilität lichtbeständiger aromatischer Amine wurde gemäß Testmethode 2 bestimmt. Die Ergebnisse sind in der folgenden Tabelle 5 aufgeführt.

**Tabelle 5**

| | Lonzacure M-MIPA | Lonzacure M-DIPA | Lonzacure M-CDEA | Lonzacure M-DEA |
|---|---|---|---|---|
| Delta E 150h | 21,20 | 19,40 | 28,50 | 24,90 |
| Delta E 300h | 23,10 | 21,10 | 30,20 | 24,90 |

### Beispiel 3: Herstellung von Polyolkomponenten

Es wurden Polyolkomponenten formuliert, deren Bestandteile sich aus der folgenden Tabelle 6 ergeben.

**Tabelle 6**

| **Polyolformulierung** | **PA** | **PB** |
|---|---|---|
| | Erfindungsgemäß | Nicht erfindungsgemäß |
| | Gewichtsteile | Gewichtsteile |
| Polycaprolactonpolyol (OH-Gehalt ca. 10 mol/kg | 60 | 90 |
| Glycerol | 30 | |
| 4,4'-Methylen-bis(3-chlor-2,6-diethylanilin) | 2 | |
| Füllstoffe (z.B. Talkum und Titandioxid) | 50 | 50 |
| Molekularsieb | 25 | 25 |
| Lichtschutzmittel (z.B. HALS und UV-Absorber) | 2,5 | 2,5 |
| Katalysator (z.B. DBTL) | 0,2 | 0,2 |
| Additive | 0,5 | 0,5 |

### Beispiel 4: Polyisocyanatkomponenten

Unter Verwendung der in der folgenden Tabelle 7 aufgeführten Bestandteile wurden Polyisocyanatkomponenten formuliert.

**Tabelle 7**

| **Polyisocyanatkomponente** | **HA** [Gewichtsteile] |
|---|---|
| | Gewichtsteile |
| Oligomeres HDI-Biuret | 100 |
| Pyrogene Kieselsäure | 2 |
| Additive | 0,5 |

### Beispiel 5: Herstellung und Untersuchung von Gelcoats

In der folgenden Tabelle 8 sind die Herstellung von Gelcoats und deren Tests zusammengefasst. Die Gelcoats wurden hergestellt, indem je eine Polyolkomponente und eine Polyisocyanatkomponente, auf 20,5 bis 24 °C temperiert, in einem solchen Verhältnis gemischt wurden, dass sich stöchiometrisches Verhältnis von Isocyanatgruppen zu Hydroxylgruppen ergab. Die Mischung wurde 3 Minuten gerührt. Die Mischung wurde in einer Schichtdicke von 500 *µ*m auf eine Stahlform aufgetragen, die mit Lösungsmittel entfettet und mit einem Trennmittel, z.B. Zywax Watershield, behandelt worden war.

Mit einem Epoxidharz/Glasgelege-Prepreg, z.B. Strafil^{®} GM 9.5 D-E 4163/44 (Fa. Hexcel Composites), wurde überlaminiert und der Verbund aus Gelcoatmischung und Substrat wurde gehärtet. Danach wurden Laminathaftung, Oberflächengüte, Glasübergangstemperatur, Abrasion, Thermovergilbung und Bewitterungsstabilität bestimmt.

**Tabelle 8**

| **Prüfergebnisse und Abgrenzung zu bisher verfügbaren Gelcoats** | | | | |
|---|---|---|---|---|
| | Erfindungsgemäßer Gelcoat | Nicht erfindungsgemäßer Gelcoat | Handelsüblicher PUR-Gelcoat | Handelsüblicher EP-Gelcoat |
| | Stöchiometrische Mischung aus PA und HA | Stöchiometrische Mischung aus PB und HA | | |
| Haftung zum Laminat (Testmethode 7) | | | | |
| Nach einer Laminierzeit von 1 Stunde | vollständig | teilweise | vollständig | vollständig |
| Nach einer Laminierzeit von 72 Stunden | vollständig | keine | keine | nicht bestimmt |
| Oberflächengüte: (visuell) | keine Einfallstellen glatte Oberfläche | sehr viele Einfallstellen | sehr viele Einfallstellen | keine Einfallstellen glatte Oberfläche |
| Stabilität gegenüber Thermovergilbung (Testmethode 4) | 4,6 | nicht bestimmt | 7,9 | 17,1 |
| Stabilität gegenüber Bewitterung (Testmethode 3) | 2,7 | nicht bestimmt | 4,1 | 5,5 |
| Stabilität gegenüber Abrasionsbelastung: (Testmethode 5) | | | | |
| Abrieb nach 500 Runden | 7 mg | nicht bestimmt | 17 mg | 13 mg |
| Abrieb nach 1000 Runden | 16 mg | nicht bestimmt | 31 mg | 28 mg |
| Glasübergangstemperatur: (Testmethode 6) | 70 °C | nicht bestimmt | 35 °C | 70 °C |

### Ergebnis:

Die erfindungsgemäße Gelcoat-Formulierung zeigt im Vergleich auch nach 72 Stunden Laminierzeit und anschließender 1-stündiger Härtung des Verbundes im Vakuum-Sack bei 120 °C deutlich bessere Haftungseigenschaften als die nicht erfindungsgemäßen PUR-Formulierungen. Die Oberfläche der erfindungsgemäßen Gelcoat-Schicht weist keine Störungen durch Einfallstellen auf und grenzt sich damit von nicht erfindungsgemäßen PUR-Gelcoats ab. Darüber hinaus zeigt die erfindungsgemäße Gelcoat-Formulierung gegenüber sowohl den handelsüblichen PUR- als auch EP-Gelcoat-Formulierungen deutlich verbesserte Vergilbungs-, Bewitterungs- und Abriebbeständigkeit. Die Glasübergangstemperatur des erfindungsgemäßen PUR-Gelcoats liegt mit 70 °C in der Nähe dessen, was man von Epoxy-Gelcoats erwarten kann. Daraus ergibt sich eine im Vergleich zu handelsüblichen PUR-Gelcoats deutlich erhöhte Warmformbeständigkeit der erfindungsgemäßen Gelcoats.

## Patentansprüche

1. Verwendung einer Zweikomponenten-Zusammensetzung, welche
A) eine Polyolkomponente, die
A1) ein oder mehrere niedrigmolekulare Polyole mit einem Molekulargewicht von 60 bis 160 g/mol und einer Hydroxylgruppenkonzentration von 20 bis 35 mol Hydroxylgruppen je kg niedrigmolekulares Polyol,
A2) ein oder mehrere höhermolekulare Polyole und
A3) ein oder mehrere lichtbeständige aromatische Amine enthält, und
B) eine Polyisocyanatkomponente umfasst, die ein oder mehrere Polyisocyanate enthält,
zur Herstellung von Polyurethan-Gelcoats in Verbundbauweise mit Kunstharz.

2. Verwendung nach Anspruch 1, **dadurch gekennzeichnet, dass** das lichtbeständige aromatische Amin, gelöst in Toluol (20 Gew.-% Amin in Toluol), bei 23°C gemischt mit einer äquimolaren Menge eines oligomeren HDI-Isocyanats mit einem NCO-Gehalt von etwa 5,2 mol/kg und einer Viskosität im Bereich von 2750 bis 4250 mPas, gelöst in Toluol (80 Gew.-% Isocyanat in Toluol), eine Gelzeit von mehr als 30 Sekunden, bevorzugt mehr als 3 Minuten, bevorzugter mehr als 5 Minuten, insbesondere mehr als 20 Minuten (bestimmt nach E-DIN VDE 0291-2, 1997-06, Punkt 9.2.1), ergibt.

3. Verwendung nach Anspruch 1, **dadurch gekennzeichnet, dass** das lichtbeständige aromatische Amin, gelöst in Toluol (25 Gew.-% Amin in Toluol), bei 23°C gemischt mit einer äquimolaren Menge eines oligomeren HDI-Isocyanats mit einem NCO-Gehalt von etwa 5,2 mol/kg und einer Viskosität im Bereich von 2750 bis 4250 mPas, eine Mischung ergibt, wobei die Mischung, auf inerte weiße Prüfplatten aufgebracht und im Umluftofen für 30 Minuten bei 80°C und dann für 60 Minuten bei 120°C gehärtet ein Coating mit einer Trokkenschichtdicke von etwa 20 µm ergibt, und das Coating bei 300stündiger künstlicher Bewitterung nach ASTM-G-53 (4 Stunden UVB 313, 4 Stunden Kondensation) eine Farbtonänderung Delta E (nach DIN 5033 Teil 4 gemessen und nach DIN 6174 ausgewertet) von höchstens 50 zeigt, bevorzugt höchstens 45, bevorzugter höchstens 40, wie höchstens 30.

4. Verwendung nach Anspruch 2 oder Anspruch 3, **dadurch gekennzeichnet, dass** das lichtbeständige aromatische Amin ein Methylenbisanilin ist, insbesondere ein 4,4'-Methylenbis(2,6-dialkylanilin).

5. Verwendung nach Anspruch 3, **dadurch gekennzeichnet, dass** das lichtbeständige aromatische Amin 4,4'-Methylen-bis(3-chlor-2,6-diethylanilin) ist.

6. Verwendung nach einem der vorhergehenden Ansprüche, **dadurch gekennzeichnet, dass** der Anteil lichtbeständiges aromatisches Amin in der Polyolkomponente, bezogen auf die Gesamtmasse der Bestandteile A1, A2 und A3 der Polyolkomponente, im Bereich von 0,1 bis 20 Gew.%, bevorzugter 0,3 bis 10 Gew.% und insbesondere 1 bis 3 Gew.% liegt.

7. Verwendung nach einem der vorhergehenden Ansprüche, **dadurch gekennzeichnet, dass** der Anteil niedrigmolekulares Polyol in der Polyolkomponente, bezogen auf die Gesamtmasse der Bestandteile A1, A2 und A3 der Polyolkomponente, im Bereich von 2 bis 60 Gew.-% liegt.

8. Verwendung nach Anspruch 7, **dadurch gekennzeichnet, dass** der Anteil niedrigmolekulares Polyol in der Polyolkomponente, bezogen auf die Gesamtmasse der Bestandteile A1, A2 und A3 der Polyolkomponente, im Bereich von 5 bis 50 Gew.-%, bevorzugt 10 bis 45 Gew.-%, bevorzugter 20 bis 40 Gew.-% und insbesondere 30 bis 35 Gew.-% liegt.

9. Verwendung nach einem der vorhergehenden Ansprüche, **dadurch gekennzeichnet, dass** die Hydroxylgruppenkonzentration des niedrigmolekularen Polyols im Bereich von 25 bis 34, bevorzugter im Bereich von 28 bis 34 und insbesondere im Bereich von 30 bis 33 mol Hydroxylgruppen je kg niedrigmolekulares Polyol liegt.

10. Verwendung nach Anspruch 9, **dadurch gekennzeichnet, dass** das niedrigmolekulare Polyol ausgewählt ist aus geradkettigen oder verzweigtkettigen Glykolen, Triolen, Tetrolen und Pentolen, bevorzugt Ethylenglykol, 1,2- und 1,3-Propylenglykol, Butandiol, Glycerol, Trimethylolmethan, Trimethylolethan, Trimethylolpropan, meso-Erythrit und Pentaerythrit, insbesondere Glycerol.

11. Verwendung nach einem der vorhergehenden Ansprüche, **dadurch gekennzeichnet, dass** die Polyolkomponente frei von aliphatischen Dicarbonsäuren ist.

12. Verwendung nach einem der vorhergehenden Ansprüche, **dadurch gekennzeichnet, dass** das höhermolekulare Polyol ausgewählt ist aus Polyesterpolyolen und Polyetherpolyolen, Acrylatpolyolen und Polyolen auf Basis dimerer Fettsäuren.

13. Verwendung nach einem der vorhergehenden Ansprüche, **dadurch gekennzeichnet, dass** der Anteil höhermolekulares Polyol in der Polyolkomponente, bezogen auf die Gesamtmasse der Bestandteile A1, A2 und A3 der Polyolkomponente, im Bereich von 97 bis 30 Gew.%, bevorzugt 90 bis 40 Gew.%, bevorzugter 80 bis 45 Gew.% und insbesondere 70 bis 50 Gew.% liegt.

14. Verwendung nach einem der vorhergehenden Ansprüche, **dadurch gekennzeichnet, dass** die Polyolkomponente zusätzlich einen oder mehrere Katalysatoren enthält.

15. Verwendung nach einem der vorhergehenden Ansprüche, **dadurch gekennzeichnet, dass** die Polyisocyanatkomponente zusätzlich Kieselsäure enthält, insbesondere silanisierte pyrogene Kieselsäure.

16. Verwendung nach einem der vorhergehenden Ansprüche, **dadurch gekennzeichnet, dass** die Polyolkomponente zusätzlich ein oder mehrere Füllstoffe ausgewählt aus Talkum, Kieselerde, Titandioxid, Molsiebe, Dolomit, Quarzmehl, gefälltes CaCO₃, BaSO₄ und Kaolin enthält.

17. Verwendung nach einem der vorhergehenden Ansprüche, **dadurch gekennzeichnet, dass** die Polyolkomponente zusätzlich ein oder mehrere Additive ausgewählt aus Entschäumungsmitteln, Dispergiermitteln, Entlüftungsmitteln und Katalysatoren enthält.

18. Verwendung nach einem der vorhergehenden Ansprüche, **dadurch gekennzeichnet, dass** die Polyisocyanatkomponente zusätzlich ein oder mehrere Additive ausgewählt aus Entschäumungsmitteln, Dispergiermitteln, Entlüftungsmitteln, und Katalysatoren enthält.

19. Verfahren zur Herstellung von Polyurethan-Gelcoats in Verbundbauweise mit Kunstharz, bei dem
i)
A) eine Polyolkomponente, die
A1) ein oder mehrere niedrigmolekulare Polyole mit einem Molekulargewicht von 60 bis 160 g/mol und einer Hydroxylgruppenkonzentration von 20 bis 35 mol Hydroxylgruppen je kg niedrigmolekulares Polyol,
A2) ein oder mehrere höhermolekulare Polyole und
A3) ein oder mehrere lichtbeständige aromatische Amine enthält,
mit
B) einer Polyisocyanatkomponente, die ein oder mehrere Polyisocyanate enthält
gemischt wird,
ii) die Mischung geliert wird und
iii) wenn die Bildung eines mechanisch ausreichend stabilen Gels abgeschlossen ist, innerhalb der Laminierzeit Kunstharz auf das Gelcoat aufgetragen wird.

20. Verfahren nach Anspruch 19, **dadurch gekennzeichnet, dass** eine Zusammensetzung nach einem der Ansprüche 1 bis 18 eingesetzt wird.

21. Verfahren nach Anspruch 19 oder 20, **dadurch gekennzeichnet, dass** das Kunstharz Epoxidharz ist.

22. Verfahren nach einem der Ansprüche 19 bis 21, **dadurch gekennzeichnet, dass** in Schritt iii) mit dem Kunstharz ein anorganisches oder organisches Vlies oder Gewebe, ein Nasslaminat oder Prepreg aufgebracht wird.

23. Gelcoat im Verbund mit Kunstharz, hergestellt nach dem Verfahren gemäß einem der Ansprüche 19 bis 22.

24. Gelcoat im Verbund mit Kunstharz nach Anspruch 23, **dadurch gekennzeichnet, dass** er ein Windflügel ist.

## Claims

1. Use of a two-component composition, which includes
A) a polyol component, which contains
A1) one or more low molecular polyols with a molecular weight of 60 to 160 g/mol and a hydroxyl group concentration of 20 to 35 mol hydroxyl groups per kg low molecular polyol,
A2) one or more higher molecular polyols and
A3) one or more light-resistant aromatic amines, and
B) includes a polyisocyanate component, which contains one or more polyisocyanates,
to produce polyurethane gel coats in a composite construction with synthetic resin.

2. Use as claimed in Claim 1, **characterised in that** the light-resistant aromatic amine, dissolved in toluol (20 wt.% amine in toluol), mixed at 23°C with an equimolar amount of an oligomeric HDI isocyanate with an NCO content of about 5.2 mol/kg and a viscosity in the range of 2750 to 4250 mPas, dissolved in toluol (80 wt.% isocyanate in toluol) results in a gel time of more than 30 seconds, preferably more than 3 minutes, more preferably more than 5 minutes, particularly more than 20 minutes (determined in accordance with E-DIN VDE 0291-2, 1997-06, point 9.2.1).

3. Use as claimed in Claim 1, **characterised in that** the light-resistant aromatic amine, dissolved in toluol (25 wt.% amine in toluol), mixed at 23°C with an equimolar amount of an oligomeric HDI isocyanate with an NCO content of about 5.2 mol/kg and a viscosity in the range of 2750 to 4250 mPas results in a mixture, wherein the mixture, applied to inert, white test plates and hardened in a fan oven for 30 minutes at 80°C and then for 60 minutes at 120°C, results in a coating with a dry layer thickness of about 20 µm and after artificial weathering for 300 hours in accordance with ASTM-G-53 (4 hours UVB 313, 4 hours condensation) the coating exhibits a change in colouring Delta E (measured in accordance with DIN 5033 Part 4 and evaluated in accordance with DIN 6174) of at most 50, preferably at most 45, more preferably at most 40, such as at most 30.

4. Use as claimed in Claim 2 or 3, **characterised in that** the light-resistant aromatic amine is a methylene-bis-aniline, in particular a 4,4'-methylene-bis(2,6-dialkyl aniline).

5. Use as claimed in Claim 3, **characterised in that** the light-resistant aromatic amine is 4,4'-methylene-bis(3-chloro-2,6-diethyl aniline).

6. Use as claimed in one of the preceding claims, **characterised in that** the content of light-resistant aromatic amine in the polyol component, with respect to the total mass of the components A1, A2 and A3 of the polyol component, lies in the range of 0.1 to 20 wt.% preferably 0.3 to 10 wt.%, particularly 1 to 3 wt.% preferably 0.3 to 10 wt.%, particularly 1 to 3 wt.%.

7. Use as claimed in one of the preceding claims, **characterised in that** the content of low molecular polyol in the polyol component, with respect to the total mass of the components A1, A2 and A3 of the polyol component, lies in the range of 2 to 60 wt.%.

8. Use as claimed in Claim 7, **characterised in that** the content of low molecular polyol in the polyol component, with respect to the total mass of the components A1, A2 and A3 of the polyol component, lies in the range of 5 to 50 wt.%, preferably 10 to 45 wt.%, more preferably 20 to 40 wt.% and particularly 30 to 35 wt.%.

9. Use as claimed in one of the preceding claims, **characterised in that** the hydroxyl group concentration of the low molecular polyol lies in the range of 25 to 34, more preferably in the range of 28 to 34 and particularly in the range of 30 to 33 mol hydroxyl groups per kg low molecular polyol.

10. Use as claimed in Claim 9, **characterised in that** the low molecular polyol is selected from straight chain or branched chain glycols, triols, tetrols and pentols, preferably ethylene glycol, 1,2- and 1,3-propylene glycol, butanediol, glycerol, trimethylolmethane, trimethylolethane, trimethylolpropane, meso-erythritol and pentaerythritol, particularly glycerol.

11. Use as claimed in one of the preceding claims, **characterised in that** the polyol component is free of aliphatic dicarbonic acids.

12. Use as claimed in one of the preceding claims, **characterised in that** the higher molecular polyol is selected from polyester polyols and polyether polyols, acrylate polyols and polyols based on dimeric fatty acids.

13. Use as claimed in one of the preceding claims, **characterised in that** the content of higher molecular polyol in the polyol component, with respect to the total mass of the components A1, A2 and A3 of the polyol component, lies in the range of 97 to 30 wt.%, preferably 90 to 40 wt.%, more preferably 80 to 45 wt.% and particularly 70 to 50 wt.%.

14. Use as claimed in one of the preceding claims, **characterised in that** the polyol component additionally includes one or more catalysts.

15. Use as claimed in one of the preceding claims, **characterised in that** the polyisocyanate component additionally includes silica, particularly silanised, pyrogenic silica.

16. Use as claimed in one of the preceding claims, **characterised in that** the polyol component additionally includes one or more fillers selected from talc, silicon dioxide, titanium dioxide, molecular sieves, dolomite, silica flour, precipitated CaCO₃, BaSO₄ and kaolin.

17. Use as claimed in one of the preceding claims, **characterised in that** the polyol component additionally includes one or more additives selected from defoaming agents, dispersing agents, deaeration agents and catalysts.

18. Use as claimed in one of the preceding claims, **characterised in that** the polyisocyanate component additionally includes one or more additives selected from defoaming agents, dispersing agents, deaeration agents and catalysts.

19. A method of producing polyurethane gel coats in a composite construction with synthetic resin, in which:
i)
A) a polyol component, which includes
A1) one or more low molecular polyols with a molecular weight of 60 to 160 g/mol and a hydroxyl group concentration of 20 to 35 mol hydroxyl groups per kg low molecular polyol,
A2) one or more higher molecular polyols and
A3) one or more light-resistant aromatic amines is mixed with
B) a polyisocyanate component, which includes one or more polyisocyanates,
ii) the mixture is gelled and
iii) when the formation of a mechanically sufficiently stable gel is terminated, synthetic resin is applied within the laminating time to the gel coat.

20. A method as claimed in Claim 19, **characterised in that** a composition as claimed in one of Claims 1 to 8 is used.

21. A method as claimed in Claim 19 or 20, **characterised in that** the synthetic resin is epoxide resin.

22. A method as claimed in one of Claims 19 to 21, **characterised in that** in step iii) an inorganic or organic fleece or textile, a wet laminate or prepreg is applied with the synthetic resin.

23. A gel coat in a composite construction with synthetic resin produced by the method as claimed in one of Claims 19 to 22.

24. A gel coat in a composite construction with synthetic resin as claimed in Claim 23, **characterised in that** it is an air vane.

## Revendications

1. Utilisation d'une composition à deux composants, qui
A) contient un composant polyol, qui contient
A1) un ou plusieurs polyols à faible masse moléculaire, ayant une masse moléculaire de 60 à 160 g/mol et une concentration des groupes hydroxyle de 20 à 35 mol de groupes hydroxyle par kg de polyol à faible masse moléculaire,
A2) un ou plusieurs polyols à grande masse moléculaire, et
A3) une ou plusieurs amines aromatiques résistantes à la lumière, et
B) comprend un composant polyisocyanate, qui contient un ou plusieurs polyisocyanates,
pour la fabrication d'un enduit gélifié de polyuréthanne, en construction composite avec une résine synthétique.

2. Utilisation selon la revendication 1, **caractérisée en ce que** l'amine aromatique résistante à la lumière, dissoute dans du toluène (20 % en poids d'amine dans le toluène), mélangée à 23°C à une quantité équimolaire d'un isocyanate HDI oligomère ayant une teneur en NCO d'environ 5,2 mol/kg et une viscosité comprise dans la plage de 2750 à 4250 mPa.s, dissous dans du toluène (80 % en poids d'isocyanate dans le toluène), donne un temps de gélification supérieur à 30 secondes, de préférence supérieur à 3 minutes, d'une manière plus préférée de plus de 5 minutes, en particulier de plus de 20 minutes (déterminée selon E-DIN VDE 0291-2, 1997-06, Point 9.2.1).

3. Utilisation selon la revendication 1, **caractérisée en ce que** l'amine aromatique résistante à la lumière, dissoute dans du toluène (25 % en poids d'amine dans le toluène), mélangée à 23°C à une quantité équimolaire d'un isocyanate HDI oligomère ayant une teneur en NCO d'environ 5,2 mol/kg et une viscosité comprise dans la plage de 2750 à 4250 mPa.s, donne un mélange, le mélange appliqué sur des plaques d'essai blanches inertes et durci dans un four à circulation d'air pendant 30 minutes à 80°C puis pendant 60 minutes à 120°C, donnant un revêtement ayant une épaisseur de feuil sec d'environ 20 µm, et le revêtement présentant, après 300 heures d'exposition à des intempéries artificielles selon ASTM-G-53 (4 heures UVB 313, 4 heures de condensation), une modification de la teinte Delta E (mesurée selon DIN 5033 Partie 4 et évaluée selon DIN 6174) d'au plus 50, de préférence d'au plus 45, d'une manière plus préférée d'au plus 40, notamment d'au plus 30.

4. Utilisation selon la revendication 2 ou 3, **caractérisée en ce que** l'amine aromatique résistante à la lumière est une méthylène-bisaniline, en particulier une 4,4'-méthylène-bis(2,6-dialkylaniline).

5. Utilisation selon la revendication 3, **caractérisée en ce que** l'amine aromatique résistante à la lumière est la 4,4'-méthylène-bis(3-chloro-2,6-diéthylaniline).

6. Utilisation selon l'une des revendications précédentes, **caractérisée en ce que** la proportion de l'amine aromatique résistante à la lumière dans le composant polyol, rapportée à la masse totale des constituants A1, A2 et A3 du composant polyol, est comprise dans la plage de 0,1 à 20 % en poids, d'une manière plus préférée de 0,3 à 10 % en poids et en particulier de 1 à 3 % en poids.

7. Utilisation selon l'une des revendications précédentes, **caractérisée en ce que** la proportion du polyol à faible masse moléculaire dans le composant polyol, rapportée à la masse totale des constituants A1, A2 et A3 du composant polyol, est comprise dans la plage de 2 à 60 % en poids.

8. Utilisation selon la revendication 7, **caractérisée en ce que** la proportion du polyol à faible masse moléculaire dans le composant polyol, rapportée à la masse totale des constituants A1, A2 et A3 du composant polyol, est comprise dans la plage de 5 à 50 % en poids, de préférence de 10 à 45 % en poids, d'une manière plus préférée de 20 à 40 % en poids et en particulier de 30 à 35 % en poids.

9. Utilisation selon l'une des revendications précédentes, **caractérisée en ce que** la concentration des groupes hydroxyle du polyol à faible masse moléculaire est comprise dans la plage de 25 à 34, d'une manière plus préférée dans la plage de 28 à 34 et en particulier dans la plage de 30 à 33 mol de groupes hydroxyle par kg de polyol à faible masse moléculaire.

10. Utilisation selon la revendication 9, **caractérisée en ce que** le polyol à faible masse moléculaire est choisi parmi les glycols, triols, tétrols et pentols à faible chaîne droite ou ramifiée, de préférence l'éthylèneglycol, le 1,2- et le 1,3-propylèneglycol, le butanediol, le glycérol, le triméthylolméthane, le triméthyloléthane, le triméthylolpropane, le méso-érythritol et le pentaérythritol, en particulier le glycérol.

11. Utilisation selon l'une des revendications précédentes, **caractérisée en ce que** le composant polyol est exempt d'acides dicarboxyliques aromatiques.

12. Utilisation selon l'une des revendications précédentes, **caractérisée en ce que** le polyol à grande masse moléculaire est choisi parmi les polyester-polyols et polyéther-polyols, les acrylates-polyols et les polyols à base d'acides gras dimères.

13. Utilisation selon l'une des revendications précédentes, **caractérisée en ce que** la proportion du polyol à grande masse moléculaire dans le composant polyol, rapportée à la masse totale des constituants A1, A2 et A3 du composant polyol, est comprise dans la plage de 97 à 30 % en poids, de préférence de 90 à 40 % en poids, d'une manière plus préférée de 80 à 45 % en poids et en particulier de 70 à 50 % en poids.

14. Utilisation selon l'une des revendications précédentes, **caractérisée en ce que** le composant polyol contient en outre un ou plusieurs catalyseurs.

15. Utilisation selon l'une des revendications précédentes, **caractérisée en ce que** le composant polyisocyanate contient en outre de l'acide silicique, en particulier de l'acide silicique pyrogène silanisé.

16. Utilisation selon l'une des revendications précédentes, **caractérisée en ce que** le composant polyol contient en outre une ou plusieurs matières de charge choisies parmi le talc, la silice, le dioxyde de titane, les tamis moléculaires, le dolomite, la poudre de quartz, le CaCO₃ précipité, le BaSO₄ et le kaolin.

17. Utilisation selon l'une des revendications précédentes, **caractérisée en ce que** le composant polyol contient en outre un ou plusieurs additifs choisis parmi les antimoussants, les dispersants, les agents de dégazage et les catalyseurs.

18. Utilisation selon l'une des revendications précédentes, **caractérisée en ce que** le composant polyisocyanate contient en outre un ou plusieurs additifs choisis parmi les antimoussants, les dispersants, les agents de dégazage et les catalyseurs.

19. Procédé de fabrication d'un enduit gélifié de polyuréthanne en construction composite avec une résine synthétique, dans lequel
i)
A) on mélange un composant polyols qui contient
A1) un ou plusieurs polyols à faible masse moléculaire, ayant une masse moléculaire de 60 à 160 g/mol et une concentration des groupes hydroxyle de 20 à 35 mol de groupes hydroxyle par kg de polyol à faible masse moléculaire,
A2) un ou plusieurs polyols à grande masse moléculaire, et
A3) une ou plusieurs amines aromatiques résistantes à la lumière, et
à
B) un composant polyisocyanate qui contient un ou plusieurs polyisocyanates,
ii) on gélifie le mélange, et
iii) quand la formation d'un gel ayant une stabilité mécanique suffisante est terminée, on applique pendant le temps de stratification la résine synthétique sur l'enduit gélifié.

20. Procédé selon la revendication 19, **caractérisé en ce qu'**on utilise une composition selon l'une des revendications 1 à 18.

21. Procédé selon la revendication 19, **caractérisé en ce que** la résine synthétique est une résine époxyde.

22. Procédé selon l'une des revendications 19 à 21, **caractérisé en ce que** dans l'étape iii), on applique avec la résine synthétique un non-tissé ou un tissé inorganique ou organique, un stratifié humide ou un pré-imprégné.

23. Enduit gélifié formant composite avec une résine synthétique, fabriqué par le procédé selon l'une des revendications 19 à 22.

24. Enduit gélifié formant composite avec une résine synthétique selon la revendication 23, qui est une ailette d'éolienne.
